# EUROPÄISCHE PATENTSCHRIFT

(11) **EP 1 441 829 B1**
(45) Veröffentlichungstag und Bekanntmachung des Hinweises auf die Patenterteilung: **21.12.2005**
(21) Anmeldenummer: 02751111.2
(22) Anmeldetag: 05.07.2002
(51) Int. Cl.: B01D 24/16, B01D 24/46

(54) **VORRICHTUNG UND VERFAHREN ZUR REINIGUNG VON ABWASSER**
DEVICE AND METHOD FOR THE PURIFICATION OF EFFLUENT
DISPOSITIF ET PROCEDE DE PURIFICATION D'EAUX USEES

(30) Priorität: 25.10.2001 DE 10152047
(43) Veröffentlichungstag der Anmeldung: 04.08.2004
(73) Patentinhaber: WashTec Holding GmbH, 86153 Augsburg (DE)
(72) Erfinder: IDEN, Matthias, Dr., 53115 Bonn (DE); RIEDL, Thomas, 86450 Altenmünster (DE)
(74) Vertreter: Gehrsitz, Stefan
(86) Internationale Anmeldenummer: PCT/EP2002/007475
(87) Internationale Veröffentlichungsnummer: WO 2003/035213

(56) Entgegenhaltungen:
- WO-A-00/43097
- DE-A- 3 915 958
- GB-A- 2 302 290
- PATENT ABSTRACTS OF JAPAN vol. 016, no. 455 (C-0987), 22. September 1992 (1992-09-22) -& JP 04 161203 A (RINFUOOSU KOUGIYOU KK), 4. Juni 1992 (1992-06-04)

## Beschreibung

Die Erfindung betrifft eine Vorrichtung und ein Verfahren zur Reinigung von Abwasser nach dem Oberbegriff von Anspruch 1 bzw. Anspruch 9.

Derartige Filtriervorrichtungen und -verfahren sind aus dem Stand der Technik bekannt, beispielsweise aus den Druckschriften DE 42 10 571 C1, DE 27 08 340 C3, US 4,720,347-A, DE 16 42 879, DE 593 364 und DE 32 12 398 A1. Bei den bekannten Filtervorrichtungen ist das Filtermedium, beispielsweise Quarzkies oder Sand, in einen im wesentlichen zylindrischen Filterbehälter eingebracht. Das zu reinigende Schmutzwasser durchströmt das Filtermedium mit konstanter Geschwindigkeit entweder in Aufwärtsrichtung (entgegen der Schwerkraft) oder in Abwärtsrichtung, wobei Schmutzpartikel aus dem zu reinigenden Abwasser entfernt werden, indem sich diese am Filtermedium anlagern.

Aus der DE 39 15 958 A1 ist ein Verfahren und Vorrichtung zum Filtern von Flüssigkeiten mit einem als Filtermaterial aus Filterpartikeln und einem Rückhalteglied beschrieben, bei dem das Filtermaterial in einem Filtergefäß eine Wirbelschicht in einer von unten nach oben gerichteten Strömung der zu filternden Flüssigkeit bildet. Bei diesem Verfahren wird der Druck an dem Filtergefäß gemessen und bei Überschreiten eines vorgegebenen Druck-Grenzwertes wird die zu filternde Flüssigkeit auf ein zweites paralleles Filtergefäß umgeschaltet. Die Vorrichtung zum Filtern der Flüssigkeit umfasst zwei Filtergefäße mit jeweils einem zylindrischen Oberteil und einen sich daran anschließenden, zu einem Einlass hin konisch verjüngenden Unterteil. Die Filtergefäße sind so angeordnet, dass die Strömung von unten nach oben verläuft, wobei die Strömungsgeschwindigkeit nach oben hin abnimmt.

Bei den bekannten Filtriervorrichtungen und -verfahren ergibt sich folgendes Problem: Um eine ausreichende Qualität des Filtrats (gereinigtes Wasser) zu erreichen, muß die Durchflußgeschwindigkeit des Abwassers durch das Filtermedium niedrig gehalten werden oder es muß die effektive Filtrierstrecke verlängert werden. Letzteres scheidet schon häufig wegen der damit verbundenen Vergrößerung der Bauhöhe des Filterbehälters aus. Bei Einstellung einer vergleichsweise niedrigen Filtriergeschwindigkeit ergibt sich jedoch andererseits die Gefahr einer Filterverblockung, da bei niedrigen Filtriergeschwindigkeiten insbesondere in den zuerst durchströmten Schichten des Filtermediums sich in einem relativ kleinen Volumen eine große Menge von Schmutzpartikeln festsetzt. Um diese Gefahr der Filterverblockung auszuschließen und dennoch mit akzeptabler Filtriergeschwindigkeit arbeiten zu können, wird häufig zur Verbesserung der Filtratqualität dem zu reinigenden Abwasser ein Flockungsmittel zugesetzt. Der Zusatz von Flockungsmittel bewirkt, daß die bei hohen Filtriergeschwindigkeiten nicht ausfiltrierbaren Kleinpartikel sich zu größeren Flockungen zusammenlagern, wodurch auch Kleinpartikel filtrierbar werden. Die Zugabe von Flockungsmitteln verteuert jedoch das Filtrierverfahren und stellt eine zusätzliche Umweltbelastung dar.

Insbesondere bei der Reinigung von Abwasser aus Fahrzeugwaschanlagen hat sich gezeigt, daß die Gefahr der Filterverblockung aufgrund der im Abwasser enthaltenen Wachsbestandteile erhöht ist. Daher muß bei der Verwendung der bekannten Filtriervorrichtungen und -Verfahren für diesen Zweck die Filtriergeschwindigkeit entsprechend erhöht werden, woraus jedoch eine schlechtere Qualität des Filtrats resultiert.

Es ist daher die Aufgabe der vorliegenden Erfindung eine Vorrichtung und ein Verfahren zur Reinigung von Abwasser bereitzustellen, bei welchem bei gleichbleibender Filtrierleistung (Filtratvolumen pro Zeit) auch ohne die Zugabe von Flockungsmitteln eine hohe Filtratqualität gewährleistet ist.

Gelöst wird diese Aufgabe mit einer Vorrichtung mit den kennzeichnenden Merkmalen von Anspruch 1 sowie mit einem Verfahren mit den kennzeichnenden Merkmalen von Anspruch 9. Vorteilhafte Ausgestaltungen der Vorrichtung und des Verfahrens sind den Unteransprüchen zu entnehmen.

Nachfolgend wird die Erfindung anhand von Ausführungsbeispielen unter Bezugnahme auf die begleitenden Zeichnungen näher erläutert. Die Zeichnungen zeigen:
- **Figur 1:**: Schematische Darstellung einer Abwasser-Reinigungsanlage;
- **Figur 2:**: Querschnitt durch einen Filterbehälter der Vorrichtung von Figur 1, im Filtrierbetrieb (links) bzw. im Rückspülbetrieb (rechts);
- **Figur 3:**: Querschnitt durch einen Filterbehälter gem. Figur 2 mit einer Detailansicht;

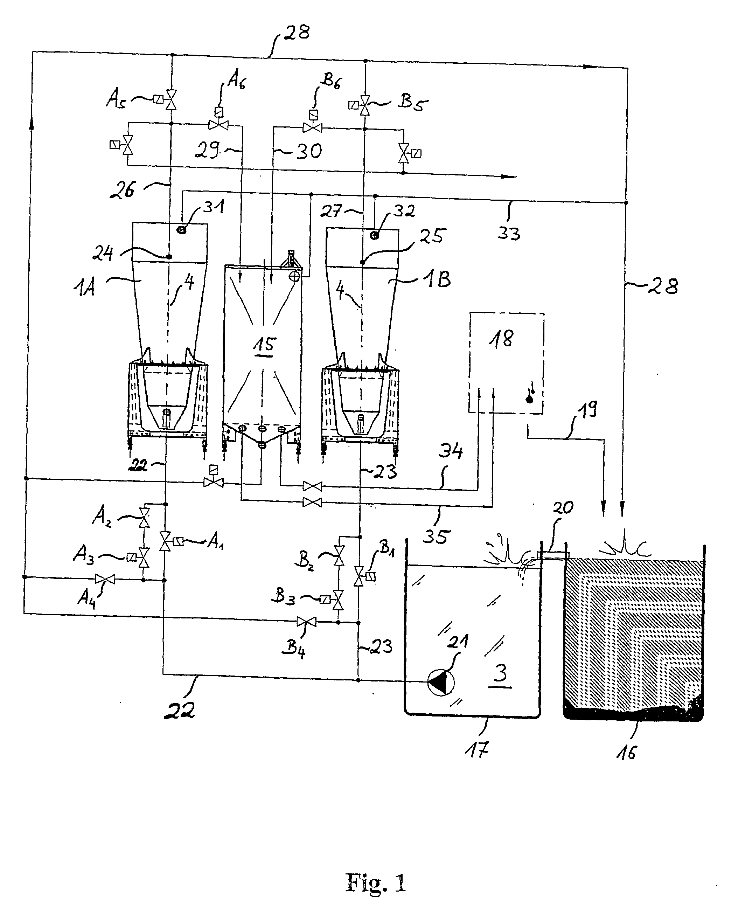

Figur 1 zeigt eine schematische Darstellung einer Filtrationsanlage zur Reinigung von Abwasser. Diese umfaßt einen Schlammfang 16, ein Entnahmebecken 17, zwei Filterbehälter 1A und 1B sowie einen Brauchwassertank 15. Das zu reinigende Abwasser kommt von einer Verbraucherstelle 18, beispielsweise einer Fahrzeugwaschanlage. Das dort erzeugte Abwasser wird über eine Schmutzwasserleitung 19 in den Schlammfang 16 geleitet. Dort setzen sich die groben Schmutzteilchen durch Sedimentation am Boden ab. Das so vorgereinigte Wasser fließt über einen Überlauf 20 in das Entnahmebecken 17. Im Entnahmebecken 17 ist eine Tauchpumpe 21 eingelassen, welche das vorgereinigte Wasser 3 aus dem Entnahmebecken zu den Filterbehältern 1A und 1B fördert.

Die Förderung des vorgereinigten Schmutzwassers 3 erfolgt zunächst über die Leitung 22, durch das geöffnete Ventil A₃ und durch das Drosselventil A₂ in den Filterbehälter 1A. Während des Einleitens des Schmutzwassers 3 zur Reinigung in den Filterbehälter 1A bleibt das Ventil A₁ geschlossen. Das eingeleitete Schmutzwasser 3 durchströmt sowohl den Filterbehälter 1A als auch den Filterbehälter 1B, in welchen eine Kiesschüttung als Filtermedium eingebracht ist, von unten nach oben, entgegen der Schwerkraft. Oberhalb des Kiesbetts sammelt sich das gereinigte Wasser. Unterhalb des Wasserspiegels des Reinwassers ist in dem Filterbehälter 1A eine Öffnung 24 angeordnet, durch welche das Reinwasser entnommen werden kann. Der Filterbehälter 1B weist eine entsprechende Öffnung 25 auf. An die Öffnungen 24 und 25 sind jeweils Reinwasser-Entnahmeleitungen 26 bzw. 27 angeflanscht. Diese Leitungen 26 bzw. 27 verzweigen sich jeweils einerseits in Zufuhrleitungen 29 und 30 zum Brauchwassertank 15 und andererseits in eine gemeinsame Abfuhrleitung 28, welche in den Schlammfang 16 mündet. Zwischen den Verzweigungspunkten in den Leitungen 26 und 27 zu den Leitungen 28, 29 und 30 sind jeweils verschließbare Ventile A5, A6 bzw. B5 bzw. B6 angeordnet.

Zur Einleitung von in den Filterbehältern 1A und 1B gereinigtem Wasser in den Brauchwassertank 15 wird das Ventil A6 bzw. B6 geöffnet, so daß das gereinigte Wasser über die Leitungen 26 ,27, 29 und 30 in den Brauchwassertank 15 fließen kann, während die Ventile A5 und B5 geschlossen bleiben. Vom Brauchwassertank 15 führen Reinwasserleitungen 34 und 35 zum Verbraucher 18.

Sobald die Filtrierleistung, also das pro Zeiteinheit filtrierte Brauchwasser, nachläßt und unter einen vorgegebenen Wert abfällt oder nach einer voreingestellten Zeit erfolgt eine Reinigung des Filtermedfiums im Filterbehälter 1A durch einen Rückspülvorgang. Hierfür bleibt das Ventil A₃ und das Drosselventil A₂ geöffnet. Zusätzlich wird das By-Pass-Ventil A₁ geöffnet. Hierdurch erhöht sich bei gleichbleibendem Druck in der Leitung 22 der dem Filterbehälter 1A zugefährte Volumenstrom pro Zeiteinheit auf etwa den doppelten Wert wie beim Filtrationsvorgang. Typische Werte des einem Filterbehälter pro Zeiteinheit zugeführten Volumenstroms an Abwasser sind beispielsweise 2 - m³/h beim Filtrationsvorgang und entsprechend ca. 4 m³/h beim Rückspülvorgang. Zum Rückspülen wird das vorgereinigte Abwasser 3 benutzt. Beim Rückspülvorgang durchströmt das Wasser das Filtermedium in derselben Richtung wie beim Filtrationsvorgang, also von unten nach oben. Aufgrund des größeren Volumenstroms erfolgt eine Expansion und damit eine Fluidisierung des Filtermediums, wodurch sich die an den Filterpartikeln angelagerten Schmutzteilchen ablösen.

Wegen des größeren Volumenstroms und der Verwirbelung des Filtermediums steigt der Wasserspiegel im oberen Teil des Filterbehälters 1A an und übersteigt die Höhe einer Öffnung 31. Der Filterbehälter 1B ist mit einer entsprechenden Öffnung 32 versehen. An die Öffnungen 31 bzw. 32 ist eine gemeinsame Abfuhrleitung 33 angeschlossen. Diese Abfuhrleitung 33 führt in die Leitung 28 und schließlich in den Schlammfang 16. Dadurch werden die beim Rückspülvorgang von den Filterpartikeln abgelösten Schmutzpartikel im oberen Bereich des Filterbehälters 1A fluidisiert und schließlich über die Leitungen 33 und 28 in den Schlammfang 16 transportiert. Der Rückspülvorgang ist so lange durchzuführen, bis eine vollständige Reinigung des Filtermediums erfolgt ist. Je nach Verschmutzungsgrad des zu reinigenden Abwassers ist eine Rückspülung in Intervallen von ca. 1 bis 4 Stunden mit einer Rückspüldauer von 3 bis 10 Minuten durchzuführen.

Während des Rückspülvorgangs des Filterbehälters 1A kann der Filterbehälter 1B in den Filtrationsvorgang geschaltet werden, indem die Zufuhrleitung 23 durch Öffnung der Ventile B₃ und B₂ bei geschlossenem Ventil B₁ geöffnet bleibt, so daß vorgereinigtes Abwasser 3 in den Filterbehälter 1B eingeführt wird. Der Filtrationsvorgang im Behälter 1B erfolgt in derselben Weise wie vorhergehend im Behälter 1A. Das im Filterbehälter 1B gereinigte Wasser wird schließlich über die Leitungen 27 und 30, bei geöffnetem Ventil B6 und geschlossenem Ventil B5, in den Brauchwassertank 15 eingeleitet.

Wenn das Filtennedium des Filterbehälters 1A greinigt ist, wird zur Beendigung des Rückspülvorgangs zunächst das By-Pass-Ventil A₁ und das Ventil A₃ geschlossen um die Wasserzufuhr zu unterbrechen. Gleichzeitig wird das die Leitungen 26 und 28 verbindende Ventil A₅ geöffnet. Durch die Unterbrechung der Wasserzufuhr setzt sich das aufgewirbelte Filtermedium im Behälter A1 wieder ab und oberhalb des Filtermediums sammelt sich das mit den aus dem Filtermedium herausgelösten Schmutzpartikeln stark verschmutzte Abwasser. Dieses wird über die Öffnung 24 in die Leitung 26 und über das geöffnete Ventil A₅ in die Leitung 28 zum Schlammfang 16 geleitet. Etwa 20 bis 50 Sekunden nachdem die Ventile A₁ und A₃ geschlossen wurden, wird das Ventil A₃ geöffnet um den Filtrationsvorgang im Behälter 1A wieder einzuleiten. Zunächst bleibt jedoch das Ventil A₅ geöffnet und das Ventil A₆ geschlossen, um das zunächst noch unzureichende Filtratqualität aufweisende Erstfiltrat nicht in den Brauchwassertank 15 sondern in den Schlammfang 16 zu leiten. Dieser Vorgang dauert etwa 2 Minuten. Danach wird das Ventil A₅ geschlossen und das Ventil A₆ geöffnet, so daß das im Behälter 1A gereinigte Wasser über die Leitungen 26 und 29 in den Brauchwassertank 15 fließen kann.

Da während des gesamten Rückspülvorgangs im Behälter 1A der Filterbehälter 1B im Filtrationsmodus betrieben werden kann, ist zur Regenerierung des Filtermediums keine Unterbrechung des Filtrationsvorgangs erforderlich. Die beschriebene Filtrationsanlage eignet sich deshalb besonders für solche Anwendungen, bei denen ständig gereinigtes Brauchwasser zur Verfügung zu stellen ist. Durch die Anordnung der beiden Filterberhälter 1A und 1B, welche entweder beide im Filtrationsvorgang oder wechselweise im Filtrations- bzw. Rückspülvorgang betrieben werden können, ist eine Fremdwassereinspeisung oder eine entsprechend großvolumige Brauchwasservorlage entbehrlich.

Mit der beschriebenen Anordnung mit zwei Filterbehältern, welche sowohl beim Filtriervorgang als auch beim Rückspülen jeweils von unten nach oben von Abwasser durchströmt werden, ergibt sich eine energiesparende und apparativ einfache Anlage, mit der eine kontinuierliche Reinigung von Abwasser ermöglicht ist.

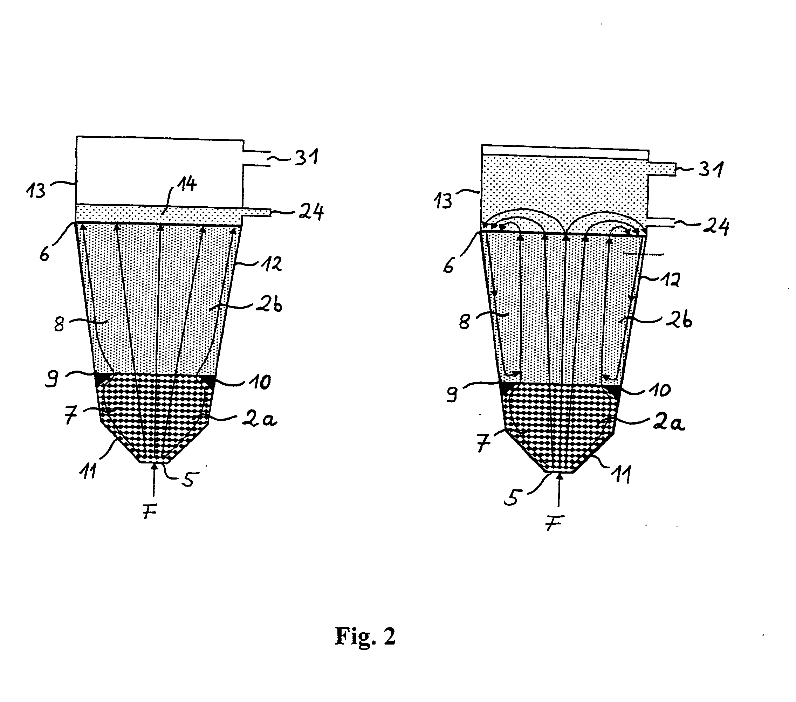

In Figur 2 ist der Filterbehälter 1A (bzw. der hierzu identische Filterbehälter 1B) im Querschnitt dargestellt und zwar sowohl während des Filtrationsvorgangs (linke Seite) als auch während des Rückspülvorgangs (rechte Seite). Der Filterbehälter 1A besteht im wesentlichen aus einem konischen Unterteil 11, einem daran anschließenden konischen Mittelteil 12 und einem zylindrischen Oberteil 13. Das Unterteil 11 und das Mittelteil 12 weisen jeweils eine im wesentlichen kegelstumpfförmige Geometrie auf, wobei der Konuswinkel des Unterteils (α) größer ist als derjenige des Mittelteils (β). Der Durchmesser des zylindrischen Oberteils 13 entspricht dem Durchmesser des konischen Mittelteils an seinem oberen Ende (Kegelboden 6).

Im Bereich des konischen Unterteils 11 und des konischen Mittelteils 12 ist in dem Behälter 1A ein Filtermedium 2a, 2b eingebracht. Als Filtermedium wird ein granulöses Material, wie z. B. Kies, Aktivkohle, Hydroanthrazit oder andere als Filtermedien geeignete Materialien verwendet. Bevorzugt wird das granulöse Filtermedium nach Art eines Mehrschichtfilters mit von unten nach oben abnehmender Körnung eingeschichtet. Die Körnung kann kontinuierlich ausgehend von der unteren, abgeflachten Kegelspitze 5 bis zum Kegelboden 6 hin abnehmen. Bevorzugt ist jedoch ein Zweischicht-Filtermedium ausgebildet, indem im unteren Bereich 7 des Filterbehälters ein erstes Filtermedium 2a mit einer groben Körnung und daran anschließend im oberen Bereich 8 ein zweites Filtermedium 2b mit einer feinen Körnung eingeschichtet ist. Hierfür wird beispielsweise Kies mit einer Körnung von 8-16 mm im unteren Bereich 7 und mit einer Körnung von 0,4-0,8 mm im oberen Bereich 8 verwendet.

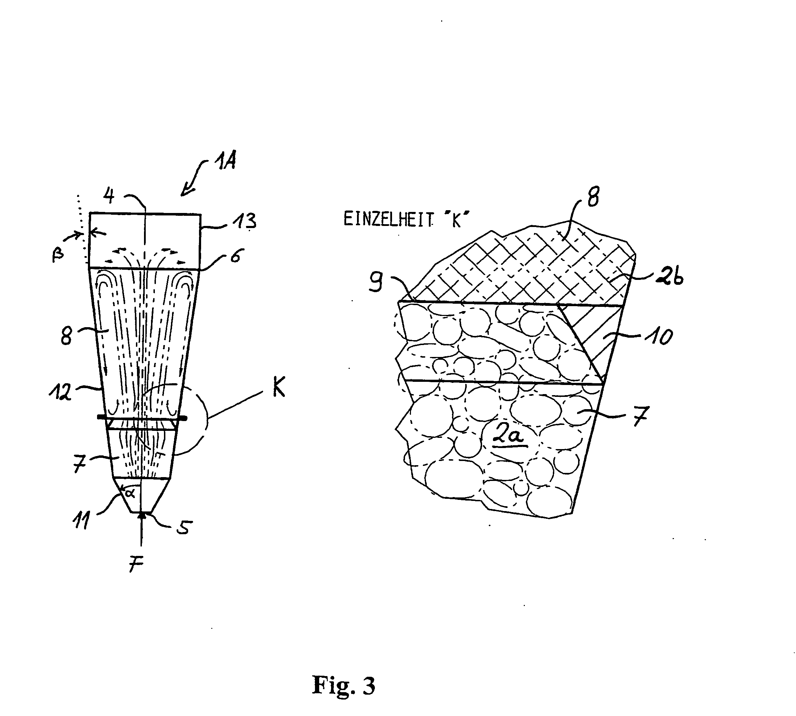

Am Übergang 9 vom unteren Bereich 7 zum oberen Bereich 8 ist in dem Filterbehälter 1A ein nach innen vorstehender, Ring 10 angeordnet, welcher bevorzugt einen keilförmigen Querschnitt aufweist. Figur 3, rechte Darstellung, zeigt diesen Bereich mit dem Ring 10 im Querschnitt in einer Detailansicht.

Beim Filtrationsvorgang wird das zu reinigende Abwasser im Bereich der abgeflachten Kegelspitze 5 in den Filterbehälter 1A in eine Filtrierrichtung F eingeführt. Im Bereich 7 mit grobkörnigem Filtermedium 2a erfolgt eine räumliche Homogenisierung des eintretenden Abwassers, wodurch sich eine gleichmäßige Verteilung des Wasserstroms über den sich senkrecht zur Filtrierrichtung F erstreckende Filtrierfläche ergibt. Aufgrund der kegelstumpfförmigen Geometrie des konischen Unterteils 11 und des konischen Mittelteils 12 ergibt sich bei Beschickung des Behälters mit einem konstanten Volumenstrom eine entlang der Filtrierrichtung F von unten nach oben abnehmende Geschwindigkeit des durchgeleiteten Abwassers (Filtriergeschwindigkeit). Diese Abnahme der Filtriergeschwindigkeit entlang der Filtrierrichtung ergibt sich aufgrund der hierzu proportionalen Zunahme der Filtriertfläche von unten nach oben. Im Bereich des konischen Unterteils 11 ergeben sich typische Strömungsgeschwindigkeiten von ca. 255 m/h im Einlaßbereich nahe der abgeflachten Kegelspitze 5 bis zu ca. 25 m/h im Bereich des Übergangs 9. Im Bereich des konischen Mittelteils 12 nehmen die Strömungsgeschwindigkeiten des durchgeleiteten Wassers dann auf bis zu. 7 m/h im Bereich des Kegelbodens 6 ab.

Aufgrund der hohen Strömungsgeschwindigkeit im Bereich des konischen Unterteils 11 und aufgrund der groben Körnung des Filtermediums 2a im Bereich 7 des Behälters ergibt sich keine nennenswerte Gefahr der Verblockung des Filtermediums in diesem Bereich. Die Durchströmung im unteren Bereich 7 dient vor allem zur gleichmäßigen Verteilung des eingeführten Abwassers über die gesamte zur Verfügung stehende Filtrierfläche. Eine nennenswerte Reinigung des Abwassers findet in diesem Bereich nicht statt. Die Reinigung des Abwassers erfolgt erst im oberen Bereich 8 durch das feinkörnige Filtermedium 2b.

Aufgrund der kontinuierlichen Abnahme der Strömungsgeschwindigkeit entlang der Filtrierrichtung F nimmt die Filtriereffizienz von unten nach oben stetig zu. Dies führt dazu, daß im Gegensatz zu herkömmlichen Filtern die gesamte Filterlänge entlang der Filtierrichtung F bestmöglich ausgenutzt wird, da ein Verblocken bzw. eine Übersättigung des Filtermediums mit Schmutzpartikeln im Eintrittsbereich aufgrund der dort höheren Filtriergeschwindigkeit weitgehend vermieden wird. Auf diese Weise läßt sich die Filtratqualität bei ansonsten gleichbleibenden Parametern erheblich steigern.

Der an der inneren Behälterwand angeordnete und nach innen vorstehende Ring 10 dient einerseits beim Filtrationsvorgang zur Homogenisierung des durchströmenden Wassers. Das sich aus der Geometrie des Filterbehälters und des Rings 10 ergebende Strömungsprofil beim Filtrationsvorgang ist in Figur 2, linke Darstellung gezeigt.

Die Figur 2, rechte Darstellung, zeigt den Filterbehälter im Querschnitt beim Rückspülvorgang. Hierbei wird, wie oben erläutert, das Filtermedium 2a, 2b in Filtrierrichtung F mit erhöhter Geschwindigkeit durchströmt, so daß es zu einer Aufwirbelung des Filtermediums kommt. Der an der Innenseite des Filterbehälters angeordnete und ins Behälterinneren hinein ragende Ring 10 bewirkt dabei in Verbindung mit der konischen Form des Mittelteils 12 eine Umwälzung des fluidisierten Filtermediums 2a. Das sich beim Rückspülvorang ergebende Strömungsprofil ist der Figur 2, rechte Darstellung, sowie der Figur 3 zu entnehmen.

Aufgrund der hohen Strömungsgeschwindigkeit wird das Filtermedium 2a im Bereich der Behälterachse aufgewirbelt und vom Wasser nach oben transportiert und schließich auf der Kiesbettoberfläche aufgeschichtet. Gleichzeitig erfährt das aufgewirbelte Filtermedium 2a bedingt durch die Schwerkraft an der Behälterwand eine Abwärtsbewegung und gelangt schließlich in den Bereich des Rings 10. Dort werden die nach unten gleitenden Filterpartikel in den zentralen Bereich des Behälters nahe seiner Achse umgelenkt, wo sie erneut durch die Wasserströmung nach oben transportiert werden. Auf diese Weise wird während des Rückspülvorgangs eine kontinuierliche Umwälzung des feinkörnigen Filtermediums 2a und dadurch ein effektiver Austrag der dort angelagerten Schmutzpartikel gewährleistet. Der Austrag der von den Filterpartikeln abgelösten Schmutzteilchen erfolgt letztendlich über das durchströmende und sich im zylindrischen Bereich 13 oberhalb des fuidisierten Kiesbetts sammelnde Wasser, welches über die Öffnung 31 abfließen kann.

Die beschriebene Vorrichtung und das Verfahren zur Reinigung von Abwasser ermöglichen eine gute Filtratqualität auch ohne Einsatz von Flockungsmitteln, wobei die Gefahr einer Verblockung des Filtennediums im Zulaufbereich weitgehend vermieden wird. Aufgrund der geometrischen Ausgestaltung der Filterbehälter 1A und 1B, insbesondere deren konischer Form und der Abflachung im Bereich der Konusspitze, ist die Bauhöhe der Vorrichtung minimiert. Die erfindungsgemäße Lösung ermöglicht eine gleichmäßige Ausnutzung des zur Filtrierung zur Verfügung stehenden Volumens des Filtermediums, wodurch sich eine bessere Filtriereffizienz ergibt. Daneben erweist sich die gewählte Geometrie des Filterbehälters auch beim Rückspülvorgang als vorteilhaft, weil ein effizienter Austrag der Schmutzpartikel durch eine kontinuierliche Umwälzung des Filtermediums während des Rückspülvorgangs erzielt wird, wodurch das gesamte Volumen des Filtermediums von Schmutzpartikeln befreit werden kann.

Ferner ist ein effektives Verfahren zur Reinigung des Filtermediums durch Rückspülen aufgezeigt, welches einerseits einen effektiven Austrag der Schmutzteilchen ermöglicht und andererseits die Fördereffizienz des Reinigungsvorgangs nicht beeinträchtigt. Dieses Rückspülverfahren kann auch bei herkömmlichen Filterbehältern mit zylindrischem Querschnitt zum Einsatz kommen.

## Patentansprüche

1. Filterbehälter (1A) zur Aufnahme eines Filtermediums (2a, 2b), durch welches verschmutztes Abwasser (3) in Filtrierrichtung durchgeleitet wird, wodurch Schmutzpartikel am Filtermedium (2a, 2b) angelagert werden, wobei sich die senkrecht zur Filtrierrichtung erstreckende Querschnittsfläche des Filterbehälters in Filtrierrichtung erweitert, **dadurch gekennzeichnet, daß** der Filterbehälter (1A) einen ins Behälterinnere vorstehenden Ring (10) aufweist, welcher den Filterbehälter (1A) in einen unteren Bereich (7) und einen oberen Bereich (8) unterteilt.

2. Filterbehälter (1A) nach Anspruch 1, **dadurch gekennzeichnet, daß** der Filterbehälter (1A) im wesentlichen eine kegelstumpfförmige Geometrie aufweist, wobei die Filtrierrichtung längs der Kegelstumpfachse (4) von der Kegelspitze (5) zum Kegelboden (6) verläuft und entgegen der Schwerkraft vertikal von unten nach oben verläuft.

3. Filterbehälter (1A) nach einem der Ansprüche 1 oder 2, **dadurch gekennzeichnet, daß** der Filterbehälter (1A) einen ersten kegelstumpfförmigen Bereich (11) mit einem größeren Konuswinkel (α), einen daran anschließenden zweiten kegelstumpfförmigen Bereich (12) mit einem kleineren Konuswinkel (β) und einen sich an den zweiten kegelstumpfförmigen Bereich (12) anschließenden dritten Bereich (13) mit zylindrischer Form aufweist, wobei die Filtrierrichtung vom ersten kegelstumpfförmigen Bereich (11) zum zylindrischen Bereich (13) verläuft und das Filtermedium (2a, 2b) im ersten und zweiten kegelstumpfförmigen Bereich (11, 12) angeordnet ist.

4. Filterbehälter (1A) nach Anspruch 3, **dadurch gekennzeichnet, daß** das Filtermedium (2a, 2b) von einem granulösen Material gebildet ist, wobei das Filtermedium (2a) im ersten kegelstumpfförmigen Bereich (11) eine gröbere Körnung als das Filtermedium (2b) im zweiten kegelstumpfförmigen Bereich (12) aufweist.

5. Filterbehälter (1A) nach einem der Ansprüche 1 bis 4, **dadurch gekennzeichnet, daß** das Filtermaterial (2a, 2b) Kies ist, mit einer Körnung von 8-16 mm im ersten Bereich (7) und einer Körnung von 0,4-0,8 mm im zweiten Bereich (8).

6. Filterbehälter (1A) nach einem der Ansprüche 3 bis 5, **dadurch gekennzeichnet, daß** sich im zylindrischen Bereich (13) das gereinigte Abwasser (14) sammelt, von wo es in einen Brauchwassertank (15) eingeleitet wird.

7. Vorrichtung zur Reinigung von Abwasser mit mindestens einem Filterbehälter (1A) gemäß dem Ansprüchen 1 bis 6, **dadurch gekennzeichnet, daß** die Vorrichtung einen Brauchwassertank (15) beinhaltet, in dem das gereinigte Abwasser (1H) aus dem zylindrischen Bereich (13) des Filterbehälters eingeleitet wird.

8. Vorrichtung nach Anspruch 7, **dadurch gekennzeichnet, daß** ein weiterer, zu dem ersten Filterbehälter im wesentlichen identischer Filterbehälter (1B) vorgesehen ist.

9. Verfahren zur Reinigung von Abwasser in einem Filterbehälter (1A), der ein Filtermedium (2a, 2b) enthält, durch welches das verschmutzte Abwasser in Filtrierrichtung durchgeleitet wird, wodurch Schmutzpartikel am Filtermedium (2a, 2b) angelagert werden, wobei sich die Geschwindigkeit des durchgeleiteten Abwassers entlang der Filtrierrichtung kontinuierlich vermindert, **dadurch gekennzeichnet, daß** das Abwasser beim Filtrationsvorgang in einen Filterbehälter mit einem ins Behälterinnere vorstehenden Ring (10) eingeleitet wird, wobei der Ring (10) eine Homogenisierung des eingeleiteten Abwassers bewirkt.

10. Verfahren nach Anspruch 9, **dadurch gekennzeichnet, daß** die Filtrierrichtung entgegen der Schwerkraft von unten nach oben verläuft.

11. Verfahren nach Anspruch 9 oder 10 **dadurch gekennzeichnet, daß** sich die Geschwindigkeit des durchgeleiteten Abwassers entlang der Filtrierrichtung von Werten zwischen 200-300 m/h auf Werte von 5-10 m/h vermindert.

12. Verfahren nach einem der Ansprüche 9 bis 11 **dadurch gekennzeichnet, daß** der Filterbehälter (1A) zur Reinigung des Filtermediums rückgespült werden kann, indem Abwasser oder Brauchwasser mit erhöhter Geschwindigkeit in Filtrierrichtung durch das Filtermedium (2a, 2b) geleitet wird.

13. Verfahren nach Anspruch 12, **dadurch gekennzeichnet, daß** die Geschwindigkeit des durchgeleiteten Wassers beim Rückspülen etwa doppelt so hoch ist wie die Filtriergeschwindigkeit.

14. Verfahren nach einem der Ansprüche 9 bis 13, **dadurch gekennzeichnet, daß** ein weiterer, zu dem ersten Filterbehälter im wesentlichen identischer Filterbehälter (1B) vorgesehen ist, wobei der erste Filterbehälter (1A) zur Reinigung des Filtermediums rückgespült wird, während der weitere Filterbehälter (1B) verschmutztes Abwasser filtriert.

## Claims

1. Filter container (1A) for receiving a filter medium (2a, 2b) through which contaminated waste water (3) is passed in the filtering direction so that particles of dirt are accumulated on the filter medium (2a, 2b), wherein the cross sectional surface of the filter container extending perpendicularly to the filtering direction is extended in the filtering direction, **characterised in that** the filter container (1A) comprises a ring (10) which projects into the interior of the container and divides the filter container (1A) into a lower area (7) and an upper area (8).

2. Filter container (1A) according to claim 1, **characterised in that** the filter container (1A) essentially has a truncated conical geometry and the filtering direction runs along the axis (4) of the truncated cone from the apex (5) of the cone to the base (6) of the cone and runs vertically from the bottom upwards against the force of gravity.

3. Filter container (1A) according to one of claims 1 or 2, **characterised in that** the filter container (1A) comprises a first truncated conical area (11) with a larger cone angle (α), an adjoining second truncated conical area (12) with a smaller cone angle (β) and a third area (13) of cylindrical shape adjoining the second truncated conical area (12), wherein the filtering direction runs from the first truncated conical area (11) to the cylindrical area (13) and the filter medium (2a, 2b) is arranged in the first and second truncated conical area (11, 12).

4. Filter container (1A) according to claim 3, **characterised in that** the filter medium (2a, 2b) is formed by a granular material, wherein the filter medium (2a) in the first truncated conical area (11) has a coarser grain size than the filter medium (2b) in the second truncated conical area (12).

5. Filter container (1A) according to one of claims 1 to 4, **characterised in that** the filter material (2a, 2b) is gravel with a grain size of 8-16 mm in the first area (7) and a grain size of 0.4-0.8 mm in the second area (8).

6. Filter container (1A) according to one of claims 3 to 5, **characterised in that** the cleaned waste water (14) collects in the cylindrical area (13) from which it is introduced into a service water tank (15).

7. Device for cleaning waste water with at least one filter container (1A) according to claims 1 to 6, **characterised in that** the device comprises a service water tank (15) into which the cleaned waste water (14) is introduced from the cylindrical area (13) of the filter container.

8. Device according to claim 7, **characterised in that** a further filter container (1B) essentially identical to the first filter container is provided.

9. Method for cleaning waste water in a filter container (1A) containing a filter medium (2a, 2b) through which the contaminated waste water is passed in the filtering direction so that particles of dirt are accumulated on the filter medium (2a, 2b), wherein the speed of the waste water passed through is continuously reduced along the filtering direction, **characterised in that** during the filtration operation the waste water is introduced into a filter container with a ring (10) which projects into the interior of the container, the ring (10) causing homogenisation of the introduced waste water.

10. Method according to claim 9, **characterised in that** the filtering direction runs from the bottom upwards against the force of gravity.

11. Method according to claim 9 or 10, **characterised in that** the speed of the waste water passed through is reduced along the filtering direction from values between 200-300 m/h to values of 5-10 m/h.

12. Method according to one of claims 4 to 11, **characterised in that** the filter container (1A) can be flushed to clean the filter medium by passing waste water or service water through the filter medium (2a, 2b) at high speed in the filtering direction.

13. Method according to claim 12, **characterised in that** the speed of the water passed through during flushing is roughly double the filtering speed.

14. Method according to one of claims 9 to 13, **characterised in that** a further filter container (1B) essentially identical to the first filter container is provided, and the first filter container (1A) is flushed to clean the filter medium while the further filter container (1B) filters contaminated waste water.

## Revendications

1. Récipient filtrant (1A) destiné à recevoir un milieu filtrant (2a, 2b), à travers lequel les eaux usées (3) sont dirigées dans la direction de filtration, grâce à quoi les particules d'impuretés se déposent sur le milieu filtrant (2a, 2b), la superficie de section du récipient filtrant, s'étendant perpendiculairement à la direction de filtration, s'élargissant dans la direction de filtration, **caractérisé en ce que** le récipient filtrant (1A) comprend un bord (10) dépassant vers l'intérieur du récipient, lequel bord subdivise le récipient filtrant (1A) en une zone inférieure (7) et une zone supérieure (8).

2. Récipient filtrant (1A) selon la revendication 1, **caractérisé en ce que** le récipient filtrant (1A) comprend sensiblement une géométrie de forme tronconique, la direction de filtration s'étendant le long de l'axe du cône tronqué (4) depuis la pointe du cône (5) vers la base du cône (6) et s'étendant verticalement de bas en haut à l'encontre de la gravité.

3. Récipient filtrant (1A) selon l'une quelconque des revendications 1 ou 2, **caractérisé en ce que** le récipient filtrant (1A) comprend une première zone de forme tronconique (11) présentant un angle de cône plus grand (α), une deuxième zone de forme tronconique (12) raccordée à la première présentant un angle de cône plus petit (β) et une troisième zone (13), raccordée à la deuxième zone de forme tronconique (12), présentant une forme cylindrique, la direction de filtration s'étendant de la première zone de forme tronconique (11) à la zone cylindrique (13) et le milieu filtrant (2a, 2b) étant disposé dans les première et deuxième zones de forme tronconique (11, 12).

4. Récipient filtrant (1A) selon la revendication 3, **caractérisé en ce que** le milieu filtrant (2a, 2b) est formé par un matériau granuleux, le milieu filtrant (2a) comprenant dans la première zone de forme tronconique (11) un grain plus gros que le milieu filtrant (2B) dans la deuxième zone de forme tronconique (12).

5. Récipient filtrant (1A) selon l'une quelconque des revendications 1 à 4, **caractérisé en ce que** le matériau granulation de 8 à 16 mm dans la première zone (7) et une granulation de 0,4 à 0,8 mm dans la deuxième zone (8).

6. Récipient filtrant (1A) selon l'une quelconque des revendications 3 à 5, **caractérisé en ce que** les eaux usées nettoyées (14) sont collectées dans la zone cylindrique (13), d'où elles sont envoyées dans une cuve d'eau industrielle (15).

7. Dispositif de nettoyage des eaux usées comprenant au moins un récipient filtrant (1A) selon les revendications 1 à 6, **caractérisé en ce que** le dispositif contient une cuve d'eau industrielle (15), dans laquelle les eaux usées nettoyées (14) provenant de la zone cylindrique (13) du récipient filtrant sont envoyées.

8. Dispositif selon la revendication 7, **caractérisé en ce qu'**il est prévu un autre récipient filtrant (1B) sensiblement identique au premier récipient filtrant.

9. Procédé de nettoyage des eaux usées dans un récipient filtrant (1A), qui contient un milieu filtrant (2a, 2b), à travers lequel les eaux usées sont acheminées dans la direction de filtration, grâce à quoi les particules d'impuretés se déposent sur le milieu filtrant (2a, 2b), la vitesse des eaux usées acheminées diminuant continuellement le long de la direction de filtration, **caractérisé en ce que** les eaux usées sont envoyées, au cours du processus de filtration, dans un récipient filtrant pourvu d'un bord (10) dépassant vers l'intérieur du récipient, le bord (10) provoquant une homogénéisation des eaux usées qui ont été envoyées.

10. Procédé selon la revendication 9, **caractérisé en ce que** la direction de filtration s'étend de bas en haut à l'encontre de la gravité.

11. procédé selon la revendication 9 ou 10, **caractérisé en ce que** la vitesse des eaux usées acheminées le long de la direction de filtration diminue de valeurs comprises entre 200 et 300 m/h à des valeurs comprises entre 5 et 10 m/h.

12. Procédé selon l'une quelconque des revendications 4 à 11, **caractérisé en ce que** le récipient filtrant (1A) destiné au nettoyage du milieu filtrant peut être lavé en contre-courant, en acheminant les eaux usées ou l'eau industrielle à une vitesse plus élevée dans la direction de filtration à travers le milieu filtrant (2a, 2b).

13. Procédé selon la revendication 12, **caractérisé en ce que** la vitesse des eaux acheminées à l'occasion du lavage à contre-courant est approximativement deux fois plus grande que la vitesse de filtration.

14. Procédé selon l'une quelconque des revendications 9 à 13, **caractérisé en ce qu'**il est prévu un autre récipient filtrant (1B) sensiblement identique au premier récipient filtrant, le premier récipient filtrant (1A) destiné au nettoyage du milieu filtrant étant lavé à contre-courant, tandis que l'autre récipient filtrant (1B) filtre les eaux usées.
